(19) Europäisches Patentamt / European Patent Office / Office européen des brevets

(11) **EP 3 187 822 B1**

## (12) EUROPEAN PATENT SPECIFICATION

(45) Date of publication and mention
of the grant of the patent:
**11.12.2019 Bulletin 2019/50**

(51) Int Cl.:
*G01B 11/24* (2006.01)     *G01B 11/00* (2006.01)
*G01B 11/26* (2006.01)     *G01M 11/02* (2006.01)
*G01B 11/02* (2006.01)     *G01B 11/245* (2006.01)
*G01M 11/00* (2006.01)

(21) Application number: **15837058.5**

(22) Date of filing: **27.08.2015**

(86) International application number:
**PCT/JP2015/074291**

(87) International publication number:
**WO 2016/031935 (03.03.2016 Gazette 2016/09)**

(54) **SURFACE SHAPE MEASURING DEVICE**

OBERFLÄCHENFORMMESSVORRICHTUNG

DISPOSITIF DE MESURE DE FORME DE SURFACE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.08.2014 JP 2014176604**

(43) Date of publication of application:
**05.07.2017 Bulletin 2017/27**

(73) Proprietor: **Nikon Corporation
Tokyo 108-6290 (JP)**

(72) Inventor: **MIYAWAKI Takashi
Tokyo 108-6290 (JP)**

(74) Representative: **Hoffmann Eitle
Patent- und Rechtsanwälte PartmbB
Arabellastraße 30
81925 München (DE)**

(56) References cited:
JP-A- H1 151 624        JP-A- H1 151 624
JP-A- H05 203 431       JP-A- H06 213 623
JP-A- H07 332 954       JP-A- H08 240 408
JP-A- H08 240 408       JP-A- 2000 234 907
JP-A- 2007 064 670      JP-A- 2012 093 225
JP-A- 2012 093 225      US-A- 5 929 983
US-A- 6 094 268         US-A1- 2013 301 042

**Description**

BACKGROUND

1. TECHNICAL FIELD

The present invention relates to a surface profile measuring apparatus designed to optically measure the surface profile of an object under measurement. For example, the surface profile measuring apparatus is capable of accurately measuring the surface profiles of optical elements such as lenses and mirrors used in cameras, semiconductor manufacturing apparatuses, telescopes and the like and particularly suitable for measuring the surface profiles of objects under measurement made of optically transparent materials.

2. RELATED ART

A known profile measuring apparatus uses a laser-based measuring device to measure the profile of an object under measurement in a non-contact manner (see, for example, Patent Document 1). Another profile measuring apparatus is proposed that is configured to measure the profile of an object under measurement based on the position and angle of inclination of the surface under measurement (see, for example, Patent Document 2).

Prior Art Documents

Patent documents

Patent document 1: Japanese Patent Application Publication No. 11-51624
Patent document 2: Japanese Patent Application Publication No. 2003-161615

The above-described conventional profile measuring apparatuses, however, have the following drawbacks. The conventional profile measuring apparatuses are capable of relatively stably measuring the profiles of objects under measurement that can reflect light, such as mirrors. When the conventional profile measuring apparatuses are used to measure the profiles of objects under measurement that are made of optically transparent materials, such as lenses, however, the results may be affected by the back surface reflection.
US 2013/301042 A1 describes a defect inspection method and defect inspection apparatus. US 6 094 268 A discloses a projection exposure apparatus and projection exposure method. JP H06-213623 A relates to an optical displacement sensor. US 5 929 983 A teaches an optical apparatus for determining the height and tilt of a sample surface. JP H05-203431 A discloses a surface shape measuring instrument. JP H08-240408 A describes a displacement sensor.
The present invention is made in light of the above-described drawbacks and aims to provide a surface profile measuring apparatus that is capable of stably measuring the surface profiles of objects under measurement made of transparent materials.

SUMMARY

To achieve the above-described purposes, a surface profile measuring apparatus exemplifying an exemplary aspect of the innovations herein includes a surface profile measuring apparatus including a measuring head, an applied position moving mechanism (for example, a workstage unit 10 and a head stage unit 30 relating to an embodiment) and a controller. The measuring head includes a distance detector and an angle detector, where the distance detector is configured to detect a distance to a surface under measurement of an object under measurement using a first probe light beam, and the angle detector is configured to detect an angle of the surface under measurement using a second probe light beam. The applied position moving mechanism is configured to move applied positions of the first probe light beam and the second probe light beam on the surface under measurement. The controller is configured to derive a profile of the surface under measurement based on the applied positions of the first and second probe light beams, the distance to the surface under measurement detected by the distance detector and the angle of the surface under measurement detected by the angle detector. The first probe light beam and the second probe light beam are obliquely incident on the surface under measurement at a predetermined angle of incidence with respect to the surface under measurement.
The distance detector and the angle detector can be disposed in the measuring head in such a manner that the first probe light beam and the second probe light beam emitted toward the surface under measurement intersect with each other, and the controller can control operation of the applied position moving mechanism in such a manner that a measurement position is positioned at the intersection between the first probe light beam and the second probe light beam.

The applied position moving mechanism can control the applied positions of the first probe light beam and the second probe light beam so that the applied positions move along a preset measurement line, and a plane of incidence of the second probe light beam with respect to the surface under measurement can be orthogonal to the measurement line. The distance detector and the angle detector can be disposed in the measuring head in such a manner that a plane of incidence of the first probe light beam with respect to the surface under measurement is orthogonal to a plane of incidence of the second probe light beam with respect to the surface under measurement.

The controller can control operation of the applied position moving mechanism in such a manner that a normal to the surface under measurement at the measurement position coincides with a line of intersection between a plane of incidence of the first probe light beam and a plane of incidence of the second probe light beam.

## EFFECTS OF THE INVENTION

According to the surface profile measuring apparatus relating to the aspect of the innovations herein, the first probe light beam that is emitted to detect the distance to the surface under measurement and the second probe light beam that is emitted to detect the angle of the surface under measurement are both configured to be incident on the surface under measurement at angles. With such a configuration, even if the object under measurement is made of a transparent material, the light reflected from the surface under measurement (the front surface) of the object under measurement and the light that has transmitted through the object under measurement and is then reflected from the back surface are separated from each other.

The invention is defined by the appended claims.

## BRIEF DESCRIPTION OF THE DRAWINGS

Fig. 1 schematically shows the overall structure of a surface profile measuring apparatus exemplifying an aspect of the innovations herein.

Fig. 2 is a schematic block diagram showing the control system of the surface profile measuring apparatus.

Fig. 3 schematically shows an optical unit seen in the direction indicated by the arrow III in Fig. 1.

Fig. 4A illustrates, as an example, a first moving pattern of an object under measurement when a probe light beam is moved along measurement lines.

Fig. 4B illustrates, as an example, the first moving pattern of the object under measurement when the probe light beam is moved along the measurement lines.

Fig. 5 illustrates, as an example, a second moving pattern of the object under measurement when the probe light beam is moved along measurement lines.

Fig. 6A is used to describe the principles of a distance detector and an angle detector and illustrates the principle of a distance detector.

Fig. 6B is used to describe the principles of a distance detector and an angle detector and illustrates the principle of an angle detector.

Fig. 7A illustrates how the plane of incidence of a first probe light beam is determined in the distance detector.

Fig. 7B illustrates how the plane of incidence of a second probe light beam is determined in the angle detector.

Fig. 8 is a block diagram exemplifying the specific structure of the angle detector used in the surface profile measuring apparatus relating to the aspect of the innovations herein.

Fig. 9 illustrates how a control unit operates when the surface profile of an object under measurement is measured by the surface profile measuring apparatus relating to the aspect of the innovations herein, where the object under measurement is a spherical mirror in which the curvature radius of the surface under measurement is equivalent to a measurement distance designated for the measuring apparatus.

Fig. 10 illustrates how a control unit operates when the surface profile of an object under measurement is measured by the surface profile measuring apparatus relating to the aspect of the innovations herein, where the curvature radius of the surface under measurement is not equivalent to the measurement distance designated for the measuring apparatus.

Fig. 11 illustrates a method of calculating a correction value for the angle around the x axis based on the distance detected by the distance detector.

Fig. 12 illustrates a method of deriving the profile of the surface under measurement based on the position data of a measurement point and corrected angle data.

DESCRIPTION OF THE EXEMPLARY EMBODIMENTS

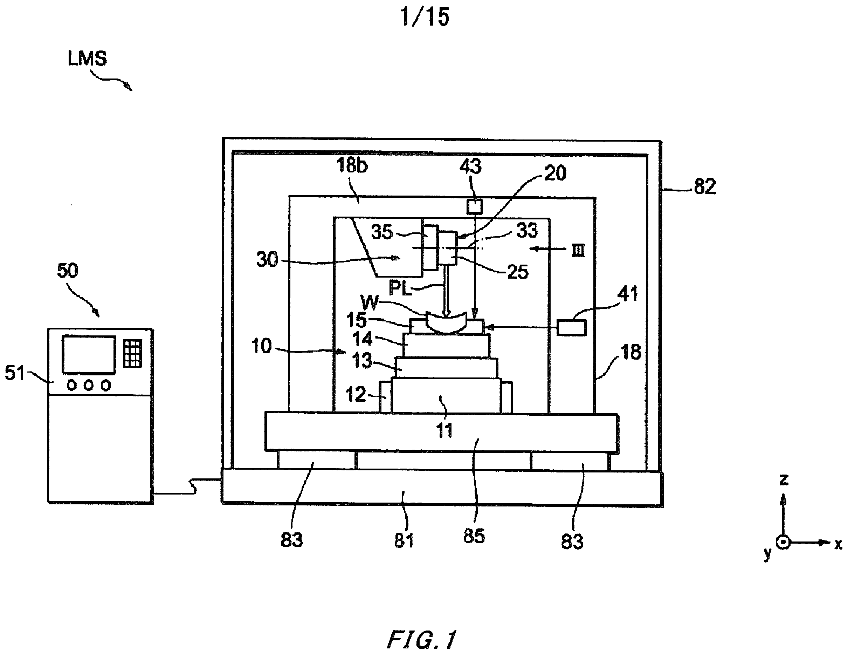

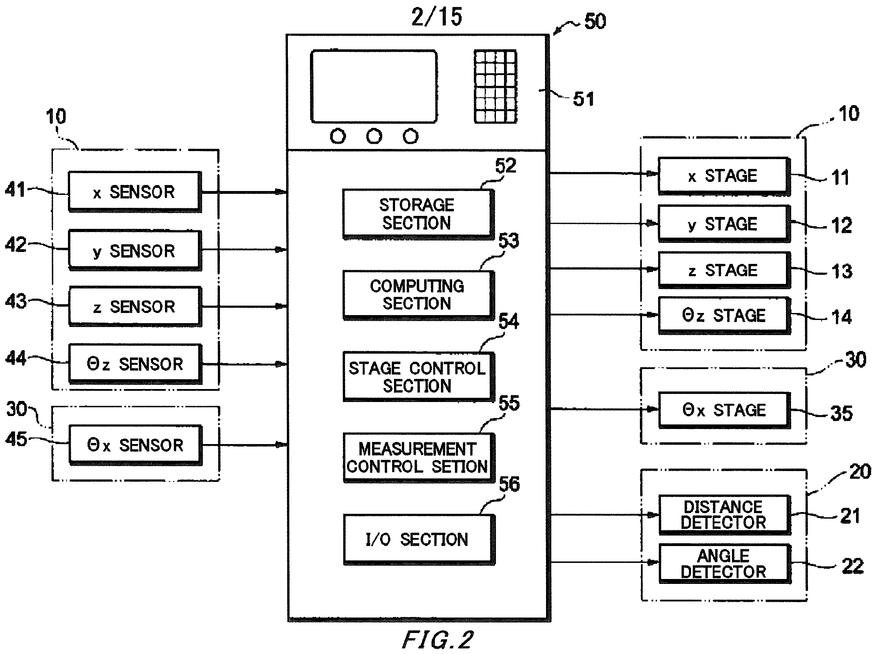

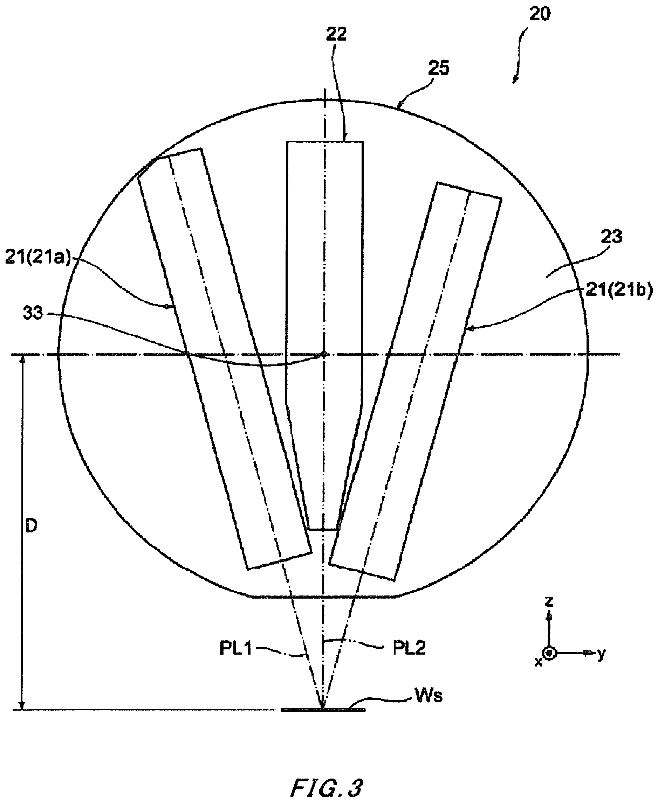

The following describes embodiments of the present invention with reference to the drawings. In an embodiment, the surface profile of an object under measurement is measured in such a manner that a probe light beam roughly scans the object under measurement with reference to a reference profile of the object under measurement and the deviation from the reference profile is measured at the points on the surface of the object under measurement to which the probe light beam is applied. The deviation from the reference profile can be obtained by using two probe light beams to measure the deviation in position and angle. The following first schematically illustrates the overall structure of the surface profile measuring apparatus relating to an embodiment of the present invention with reference to Figs. 1 to 3. Fig. 1 schematically shows the structure of a surface profile measuring apparatus LMS exemplifying an aspect of the innovations herein, Fig. 2 is a schematic block diagram showing the control system of the surface profile measuring apparatus LMS, and Fig. 3 schematically shows an optical unit 20 (measuring head 25) seen in the direction indicated by the arrow III in Fig. 1.

To make clear description, a coordinate system is defined by an x axis, an y axis and an z axis that are orthogonal to each other and shown in Fig. 1. In Fig. 1, the x axis extends left to right in the plane of the drawing, the y axis penetrates the plane of the drawing and extends front to back, and the z axis extends up and down in the plane of the drawing. The x-y plane is the horizontal plane and the z axis is the vertical axis. For the purposes of simple description, the direction along the x axis may be referred to as the left-right direction, the direction along the y axis may be referred to as the front-back direction, and the direction along the z axis may be referred to as the up-down direction in relation to the arrangement shown in Fig. 1. However, the x, y and z axes can be defined in any desired way and the positions and arrangement are not limited in any way.

The surface profile measuring apparatus LMS mainly includes a workstage unit 10, an optical unit 20, a head stage unit 30, a control unit 50 and the like. The workstage unit 10 is configured to move an object under measurement W in the directions defined by the axes. The optical unit 20 is configured to emit a first probe light beam PL1 and a second probe light beam PL2 to a surface under measurement of the object under measurement W and receive the reflected light to measure the distance to and angle of the surface under measurement. The head stage unit 30 is configured to swing a measuring head 25 to which the optical unit 20 is attached around a $\theta x$ axis so that the first and second probe light beams move along a predetermined measurement line. The control unit 50 is configured to control the operations of the other units such as the workstage unit 10, the optical unit 20, the head stage unit 30 in accordance with the manipulation by an operator.

The workstage unit 10, the optical unit 20 and the head stage unit 30 are positioned within an environmental chamber 82 that is constructed on a base frame 81 and where the temperature and humidity are regulated at a constant predetermined level.

A platen 85 is supported on the base frame 81 with a precise vibration-free apparatus 83 placed therebetween. The workstage unit 10 is attached to the platen 85. In addition, an gate-shaped frame 18 is attached to the platen 85 so as to cross over the workstage unit 10, and the optical unit 20 and the head stage unit 30 are attached to an upper beam 18b of the gate-shaped frame 18.

The workstage unit 10 is mainly constituted by a work holder 15 configured to hold the object under measurement W and a plurality of stages configured to move the work holder 15 in the respective axis directions. To be specific, the workstage unit 10 includes an x stage 11 configured to move the work holder 15 in the x axis direction (the left-right direction), a y stage 12 configured to move the work holder 15 in the y axis direction (the front-back direction), a z stage 13 configured to move the work holder 15 in the z axis direction (the up-down direction), a $\theta z$ stage 14 configured to rotate the work holder 15 around a $\theta z$ axis (the pivot axis) extending vertically and the like.

An x sensor 41, a y sensor 42, and a z sensor 43 are provided on the gate-shaped frame 18 to detect the positions of the work holder 15 in terms of the x, y and z axis directions, and the position detection signals indicating the positions of the work holder 15 in the x, y and z axis directions detected by the respective sensors are input into the control unit 50. Furthermore, a $\theta z$ sensor 44 is provided on the $\theta z$ stage 14 to detect the position of the work holder 15 in terms of the rotation angle, and the position detection signal indicating the rotation angle of the work holder 15 detected by this sensor is input into the control unit 50. The x sensor 41, the y sensor 42 and the z sensor 43 can be formed using an interferometer, a linear scale or the like, and the $\theta z$ sensor 44 can be formed using a linear scale having a curved scale, a rotary encoder or the like.

The optical unit 20 includes a distance detector 21 and an angle detector 22. The distance detector 21 is configured to emit a first probe light beam PL1 to the object under measurement W and receive the first probe light beam reflected by the surface under measurement to detect the distance to the surface under measurement. The angle detector 22 is configured to emit a second probe light beam PL2 to the object under measurement W and receive the second probe light beam reflected by the surface under measurement to detect the angle of the surface under measurement. The distance detector 21 and the angle detector 22 are attached to a common unit base 23, so that the measuring head 25 is formed as a single piece to measure the distance to and angle of the surface under measurement.

The head stage unit 30 is mainly constituted by a $\theta x$ stage 35 configured to swing the measuring head 25 having the optical unit 20 provided thereon around the θx axis (the measurement axis) 33 that extends horizontally in the left-right direction in the plane of the drawing in the Fig. 1 and extends orthogonally to the plane of the drawing in Fig. 3. The θx stage 35 is provided with a θx sensor 45 configured to detect the position of the measuring head 25 in terms of the swing angle, and the position detection signal indicating the swing angle of the measuring head 25 detected by the θx sensor 45 is input into the control unit 50. The θx sensor 45 can be formed using a rotary encoder, a linear scale having a curved scale.

Here, the optical unit 20 is adjusted and set such that the optical axis of the first probe light beam PL1 of the distance detector 21 intersects with the optical axis of the second probe light beam PL2 of the angle detector 22 at a position spaced away from the θx axis 33 by a predetermined distance (the measurement distance) D. In other words, the first probe light beam PL1 of the distance detector 21 and the second probe light beam PL2 of the angle detector 22 overlap at the position spaced away from the θx axis 33 by the measurement distance D (measurement position), where the combined probe light beam PL is applied. The control unit 50 controls the operations of the stages in such a manner that the first and second probe light beams PL1 and PL2 output from the optical unit 20 are applied to the surface under measurement at the above-mentioned measurement position. Therefore, the probe light beam PL emitted from the optical unit 20 can scan the surface under measurement of the object under measurement W by swinging the measuring head 25 around the θx axis 33 using the θx stage 35. The optical unit 20 will be described in detail later.

The control unit 50 includes a manipulating section 51 configured to allow the operator to perform actuation and manipulation, a storage section 52 having the measurement programs, the reference profile of the object under measurement and the like stored and set thereon, a computing section 53 configured to perform various types of operations, a stage control section 54 configured to control the operations of the x, y, z, θx and θz stages 11, 12, 13, 35 and 14 based on the instruction signals output from the computing section 53, a measurement control section 55 configured to control the operation of the optical unit 20 based on the instruction signals output from the computing section 53, an I/O section 56 configured to exchange signals with outside, and the like.

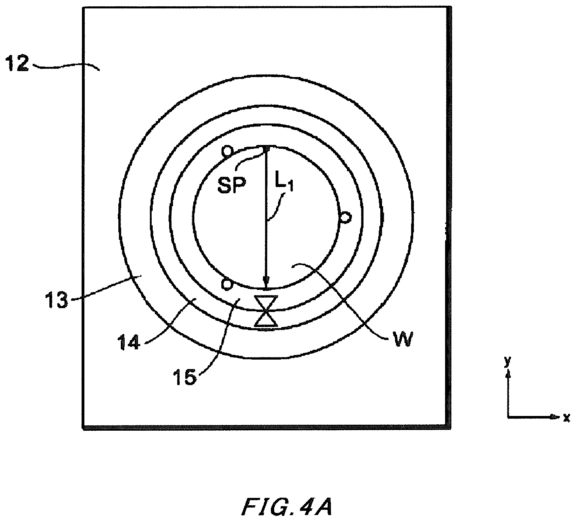

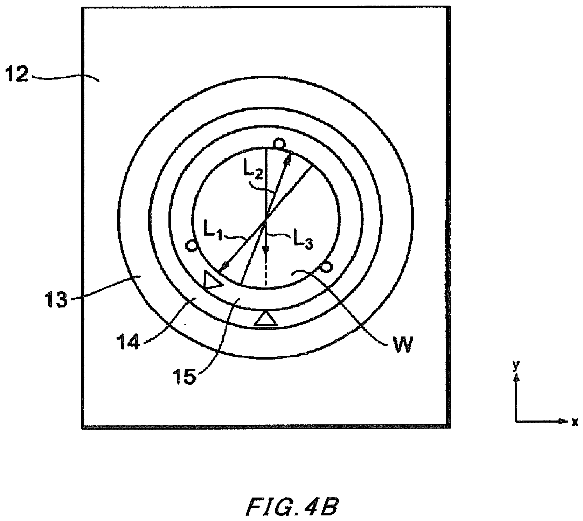

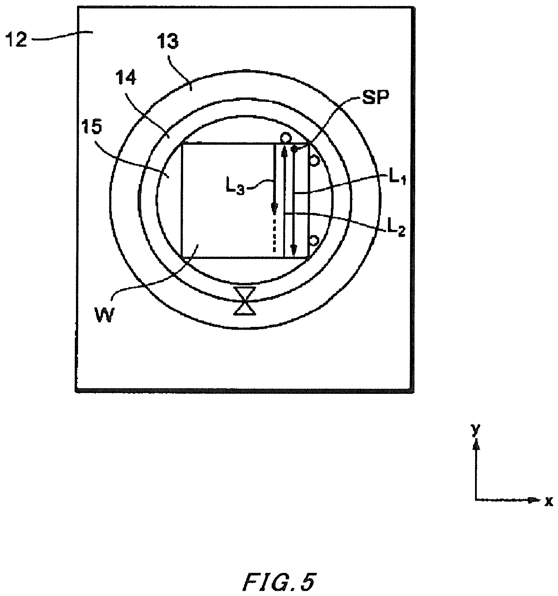

Figs. 4A and 4B and Fig. 5 schematically exemplify the moving pattern of the object under measurement when the probe light beam PL and the object under measurement W are moved relative to each other in such a manner that the probe light beam PL is moved along the measurement line. Figs. 4A and 4B and Fig. 5 schematically show the object under measurement W held by the work holder 15 seen from above and measurement lines $L_1$ to $L_3$ on the surface under measurement along which the probe light beam PL (the first and second probe light beams PL1 and PL2 at the measurement position) is moved.

Figs. 4A and 4B show exemplary moving patterns suitable for the cases where the surface under measurement of the object under measurement has an axially symmetrical surface profile, for example, the object under measurement is a meniscus lens, an aspherical lens or the like. In the present example, when the θx stage 35 is operated to swing the measuring head 25 to move the probe light beam PL, the x stage 11 and the y stage 12 are used to position the object under measurement W appropriately in the x and y axis directions in such a manner that the probe light beam PL travels along the central axis of the object under measurement W.

As shown in Fig. 4A, the probe light beam PL is moved along the measurement line $L_1$ by operating the θx stage 35 after the probe light beam PL is applied to a start point SP on the surface under measurement. In this manner, the profile of the surface under measurement is measured along the measurement line $L_1$ based on the distance and angle detected for each of the measurement points along the measurement line $L_1$. Subsequently, as shown in Fig. 4B, the θz stage 14 is used to rotate the object under measurement W by a predetermined angle (for example, approximately 2 degrees) and the object under measurement W is held at the resulting angular position. Then, the θx stage 35 is operated again to move the probe light beam PL along the measurement line $L_2$. In this manner, the profile of the surface under measurement is measured along the measurement line $L_2$ based on the distance and angle detected for each of the measurement points along the measurement line $L_2$. Following this, the θz stage 14 and the θx stage 35 are operated in the same manner and the profile of the surface under measurement is measured along the measurement lines $L_3$, .... In this manner, the measurement is radially performed on the entire surface under measurement of the object under measurement W, and the measurement data of the surface profile can be obtained.

Fig. 5 shows an exemplary moving pattern suitable for the case where the object under measurement is shaped like a rectangular flat plate, a cylindrical lens or the like. In this example, the probe light beam PL is moved along the measurement line $L_1$ by operating the θx stage 35 after the probe light beam PL is applied to a start point SP on the surface under measurement, and the profile of the surface under measurement is measured along the measurement line $L_1$ based on the distance and angle detected for each of the measurement points along the measurement line $L_1$. Subsequently, the x stage 11 is operated to move the object under measurement W to the right in Fig. 5, after which the θx stage 35 is operated to move the probe light beam PL along the measurement line $L_2$. In this manner, the profile of the surface under measurement is measured along the measurement line $L_2$ based on the distance and angle detected for each of the measurement points along the measurement line $L_2$. Following this, the x stage 11 and the θx stage 35 are operated in the same manner and the profile of the surface under measurement is measured along the measurement lines $L_3$, ....

In this manner, the profile measurement is performed along parallel lines on the entire surface under measurement of the object under measurement W, and the measurement data of the surface profile can be obtained. Additionally, after the above-described measurement procedure, the θz stage 14 may be used to rotate the object under measurement W by a predetermined angle (for example, 90 degrees) and the object under measurement W is held at the resulting angular position. Then, the θx stage 35 and the x stage 11 are alternatively operated again to measure the profile of the surface under measurement along measurement lines. In this manner, the profile measurement can be performed on the entire surface under measurement in a lattice pattern and the measurement data can be also obtained.

Referring to the surface profile measuring apparatus LMS briefly described above, the optical unit 20 emits the first probe light beam PL1 and the second probe light beam PL2 onto the surface under measurement of the object under measurement W at the measurement position and the photodetector in the optical unit 20 receives the first and second probe light beams reflected by the surface under measurement. In this way, the distance to and angle of the surface under measurement on which the probe light beam PL is applied are obtained. The control unit 50 controls the operations of the stages to move the probe light beam and the object under measurement W relative to each other, so that the position on which the probe light beam is applied is moved. In this way, the distance to and angle of each of the positions on the surface under measurement are measured sequentially along the measurement lines L. For each of the measurement points at which the measurement is performed, the detected angle is corrected based on the detected distance, and known operations such as integration and fitting are performed on the position data of each measurement point and the corrected angle data. In this manner, the profile of the surface under measurement is derived.

Stated differently, the surface profile measuring apparatus LMS is based on a profile measuring apparatus configured to measure the profile of an object under measurement based on the position and angle of inclination of the surface under measurement. In addition to this capability, the surface profile measuring apparatus LMS corrects the angle of the measurement point detected by the angle detector 22 using the distance to the measurement point detected by the distance detector 21, and uses the position data of the measurement point and the corrected angle data to derive the profile of the surface under measurement. The method of correcting the angle based on the distance detected by the distance detector 21 and the method of deriving the profile of the surface under measurement using the corrected angle data will be described in detail later.

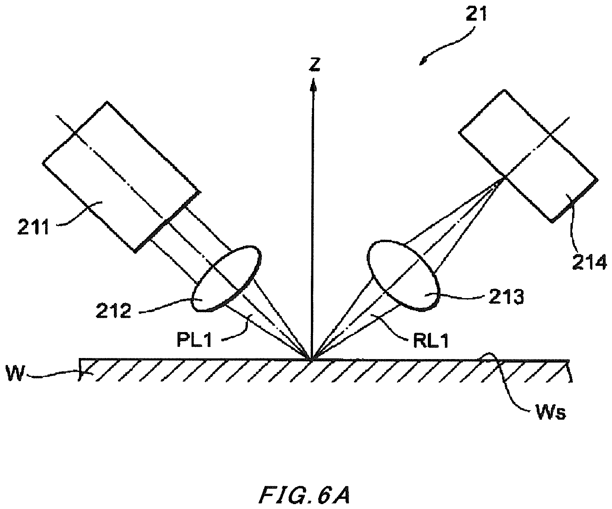

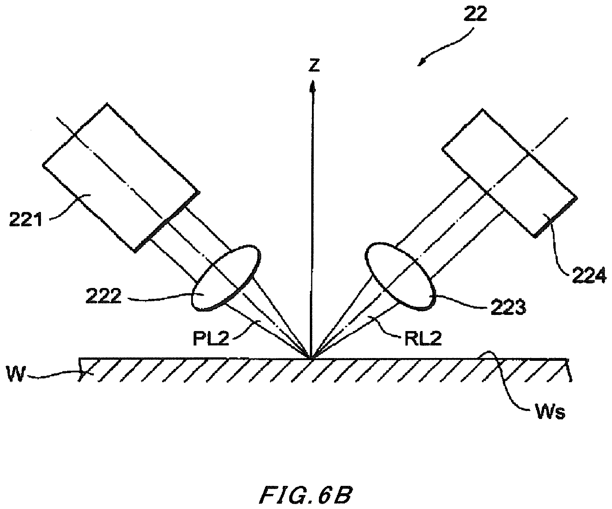

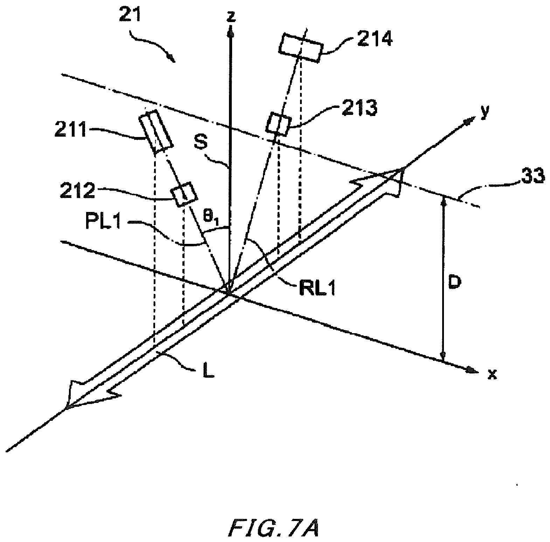

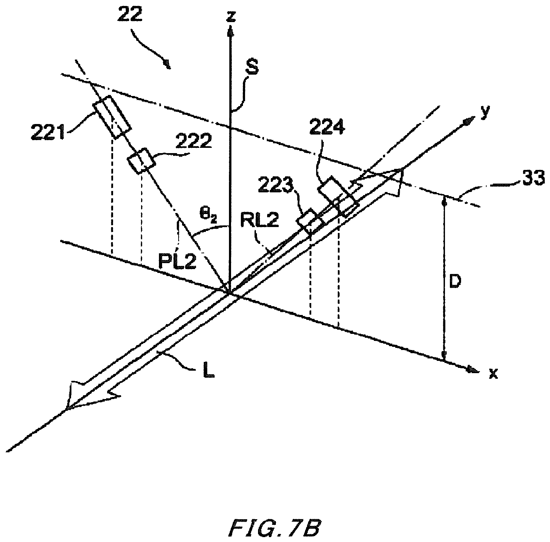

The following describes in detail the optical unit 20 with reference to Figs. 6A and 6B and 7A and 7B. The optical unit 20 is mainly constituted by the distance detector 21 and the angle detector 22. The distance detector 21 is configured to detect the distance to the surface under measurement by emitting the first probe light beam PL1 to the object under measurement W and receiving the first probe light beam reflected by the surface under measurement. The angle detector 22 is configured to detect the angle of the surface under measurement by emitting the second probe light beam PL2 to the object under measurement W and receiving the second probe light beam reflected by the surface under measurement.

Figs. 6A and 6B are used to describe the principles of the distance detector 21 and the angle detector 22. Fig. 6A illustrates the principle of the distance detector 21 and Fig. 6B illustrates the principle of the angle detector 22. In Figs. 6A and 6B, the first probe light beam PL1 from the distance detector 21 and the second probe light beam PL2 from the angle detector 22 are incident on the surface under measurement Ws extending horizontally or in the x-y direction.

The distance detector 21 is constituted by a first light source 211 configured to generate the first probe light beam, a collective lens 212 configured to collect the first probe light beam PL1 generated by the first light source 211 and direct the resulting first probe light beam PL1 to the surface under measurement Ws of the object under measurement, a collective lens 213 configured to collect the first probe light beam reflected by the surface under measurement Ws (referred to as the first reflected light beam) RL1, a photodetector 214 configured to detect the position of the first reflected light beam, and the like.

The angle detector 22 is constituted by a second light source 221 configured to generate the second probe light beam, a collective lens 222 configured to collect the second probe light beam PL2 generated by the second light source 221 and direct the resulting second probe light beam PL2 to the surface under measurement Ws of the object under measurement, a collimating lens 223 configured to collimate the second probe light beam reflected by the surface under measurement Ws (referred to as the second reflected light beam) RL2, a photodetector 224 configured to detect the position of the second reflected light beam, and the like.

The first light source 211 and the second light source 221 are each a laser light source having stabilized oscillation wavelength, optical output, beam pointing and the like, and formed by using, for example, a fiber laser, a DFB semiconductor laser or the like. The output sections of the first light source 211 and the second light source 221 are each provided with a collimator, which allows the first and second light sources 211 and 221 to output the first and second probe light beams PL1 and PL2 having parallel light fluxes. The photodetectors 214 and 224 are respectively configured to detect the position of the first reflected light beam RL1 and the position of the second reflected light beam RL2 and can be formed using, for example, a quadrant photo detector (QPD), a solid-state imaging element such as a CCD and a CMOS, or the like. In the present embodiment, a QPD is utilized.

In the distance detector 21, the first probe light beam PL1 emitted from the first light source 211 is collected by the collective lens 212 and then is incident on the surface under measurement Ws. The first probe light beam reflected by the surface under measurement Ws, or the first reflected light beam RL1 is collected by the collective lens 213 and then is incident on the photodetector 214. In the case where the distance detector 21 having the above configuration is used, the position of incidence of the first reflected light beam RL1, which is collected and then is incident on the photodetector 214, does not change even if the angle of the surface under measurement Ws changes (the surface under measurement Ws is tilted). On the other hand, the position of incidence of the first reflected light beam RL1, which is collected and then is incident on the photodetector 214, changes if the position of the surface under measurement Ws changes (shifts) in the up-down direction (in the z axis direction). Accordingly, the distance from the θx axis 33, on which the measuring head 25 is basically positioned, to the surface under measurement Ws can be calculated based on the position detection signal output from the photodetector 214 to the control unit 50.

In the angle detector 22, the second probe light beam PL2 emitted from the second light source 221 is collected by the collective lens 222 and then is incident on the surface under measurement Ws. The second probe light beam reflected by the surface under measurement Ws, or the second reflected light beam RL2 is collimated by the collimating lens 223 and then is incident on the photodetector 224. In the case where the angle detector 22 having the above configuration is used, the position of incidence of the second reflected light beam RL2, which is incident on the photodetector 224, hardly changes even if the position of the surface under measurement Ws changes (shifts) in the up-down direction. On the other hand, the position of incidence of the second reflected light beam RL2, which is incident on the photodetector 224, changes if the angle of the surface under measurement Ws changes (if the surface under measurement Ws is tilted). Accordingly, the angle of inclination of the surface under measurement Ws can be calculated based on the angle detection signal output from the photodetector 224 to the control unit 50.

In the surface profile measuring apparatus LMS, the plane of incidence of the first probe light beam PL1 in the distance detector 21 intersects with the plane of incidence of the second probe light beam PL2 in the angle detector 22. Specifically speaking, the plane of incidence of the first probe light beam PL1 of the distance detector 21 is parallel to the y-z plane, and the plane of incidence of the second probe light beam PL2 in the angle detector 22 is parallel to the x-z plane orthogonal to the y-z plane. Figs. 7A and 7B illustrate the above-described arrangements. Fig. 7A shows how the plane of incidence of the first probe light beam PL1 in the distance detector 21 is arranged, and Fig. 7B shows how the plane of incidence of the second probe light beam PL2 in the angle detector 22 is arranged.

As shown in Fig. 7A, the distance detector 21 is configured such that the plane of incidence of the first probe light beam PL1 is parallel to the y-z plane. The y-z plane is orthogonal to the θx axis 33 extending in parallel with the x axis. In other words, the distance detector 21 is assembled along the plane of the unit base 23, which provides the base of the measuring head 25, and the first light source 211 and the collective lens 212 are disposed oppositely with respect to the θx axis 33 to the collective lens 213 and the photodetector 214 (see Fig. 3).

As shown in Fig. 7B, the angle detector 22 is configured such that the plane of incidence of the second probe light beam PL2 is parallel to the x-z plane. The x-z plane is parallel with the x axis and the θx axis 33. In other words, the angle detector 22 is assembled in the thickness direction of the unit base 23, which provides the base of the measuring head 25, and the second light source 221, the collective lens 222, the collimating lens 223 and the photodetector 224 are disposed in the plane including the θx axis 33.

Furthermore, as described above briefly, the optical unit 20 is configured such that the optical axis of the first probe light beam PL1 intersects with the optical axis of the second probe light beam PL2, and adjusted and set such that the intersection is spaced away from the θx axis 33 by the distance indicated as "D" in Figs. 7A and 7B (such that the configuration shown in Fig. 7A and the configuration shown in Fig. 7B overlap each other).

To sum up, the optical unit 20 is constituted by the distance detector 21 extending along the y-z plane and the angle detector 22 extending along the x-z plane and adjusted and set such that the intersection between the first probe light beam PL1 on the y-z plane and the second probe light beam PL2 on the x-z plane is the measurement position and spaced away from the θx axis 33 by the predetermined distance D. Accordingly, at the measurement position, the first probe light beam PL1 and the second probe light beam PL2 overlap with each other and their combination or the probe light beam PL is applied. The measuring head 25, in which the optical unit 20 adjusted and set in the above-described manner, is integrally formed, is attached in such a manner that the θx stage 35 is capable of swinging the measuring head 25 around the θx axis 33 (see Fig. 3).

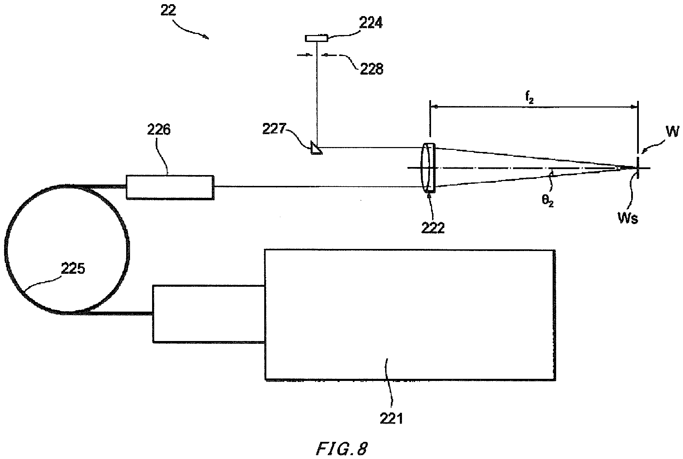

As described above, the angle detector 22 is assembled along the x-z plane. In other words, the constituents such as the second light source 221, the collective lens 222 and the photodetector 224 are arranged in the direction orthogonal to the plate plane of the unit base 23 in the measuring head 25. Fig. 8 specifically shows an exemplary structure of the angle detector 22 used in the surface profile measuring apparatus LMS. As is shown in the drawing, the angle detector 22 is constituted by the second light source 221 configured to generate the second probe light beam, an optical fiber 225 configured to guide the second probe light beam generated in the second light source 221, a collimator 226 provided at the exit end of the optical fiber 225 and configured to collimate the second probe light beam emitted from the optical fiber 225 into parallel light fluxes, the collective lens 222 configured to collect the second probe light beam PL2 that includes the parallel light fluxes provided by the collimator 226 and to apply the collected second probe light beam PL2 to the surface under measurement Ws, a mirror 227 configured to reflect the second probe light beam (the second reflected light beam) RL2, which has been reflected by the surface under measurement Ws and formed into parallel light fluxes by transmitting again through the collective lens 222, an aperture 228 configured to remove the second probe light beam that has been reflected by the back surface of the object under measurement (the second back-surface reflected light beam), the photodetector 224 configured to detect the position of the second reflected light beam RL2, and the like.

As is understood by comparing the specific structure of the angle detector 22 shown in Fig. 8 and the structure of the angle detector shown in Figs. 6B and 7B to illustrate the principle, the angle detector 22 used in the surface profile measuring apparatus LMS forgoes the collimating lens 223 since the second probe light beam PL2 to be applied to the surface under measurement Ws and the second probe light beam RL2 that has been reflected by the surface under measurement Ws transmit through the same collective lens 222. For this reason, the angle detector 22 assembled along the x-z plane can achieve a smaller size, and the measuring head 25 can have a compact structure. In addition, since the aperture 228 configured to remove the second back-surface reflected light beam that has been reflected by the back surface of the object under measurement is provided immediately before the photodetector 224, the second back-surface reflected light beam can be effectively removed even if the object under measurement has a small thickness or wedge angle.

Here, the focal length $f_2$ of the collective lens 222, which is configured to collect the second probe light beam PL2 onto the surface under measurement, is preferably approximately 80 to 160 mm, and an achromatic lens having $f_2$ = 120 mm is suitably used, for example. In addition, the angle of incidence $\theta_2$ of the second probe light beam onto the surface under measurement Ws is preferably approximately 3 to 8 degrees, and 5 degrees, for example.

On the other hand, the distance detector 21 is assembled along the y-z plane. In other words, the first light source 211, the collective lens 212, the collective lens 213, the photodetector 214 and the like are arranged in the direction along the plate plane of the unit base 23 in the measuring head 25. Accordingly, the distance detector 21 used in the surface profile measuring apparatus LMS is specifically structured such that the light emitting section and the light receiving section of the distance detector 21 are arranged oppositely with respect to the angle detector 22, which is provided at the central portion of the unit base 23. To be specific, as shown in Fig. 3, the light emitting section 21a including the first light source 211 and the collective lens 212 is positioned on the left side of the angle detector 22 and the light receiving section 21b including the collective lens 213 and the photodetector 214 is positioned on the right side of the angle detector 22. In this way, the plate plane of the unit base 23 can be efficiently utilized and the measuring head 25 can have a compact structure.

Here, the focal length $f_1$ of the collective lens 212 configured to collect the first probe light beam PL1 onto the surface under measurement can be set as appropriate within a similar range as the focal length $f_2$ of the collective lens 222. The surface profile measuring apparatus LMS is configured such that the focal length $f_1$ of the collective lens 212 is the same as the focal length $f_2$ of the collective lens 222 and achromatic lenses with $f_1$ = 120 mm are used. With such a configuration, the focal points of the distance detector 21 and the angle detector 22 can be adjusted concurrently, in addition to which the first probe light beam and the second probe light beam that are collected and then applied to the measurement point have substantially the same focal depth. Therefore, the present embodiment can eliminate the influence of the error components caused by the difference in focal depth, and the like. Here, the angle of incidence $\theta_1$ of the first probe light beam onto the surface under measurement Ws is preferably approximately 5 to 30 degrees, and 25 degrees, for example.

The probe light beam forms, for example, a circular spot having a diameter of approximately 200 $\mu$m at the applied position. The distance detector 21 measures the average change in the position of the spot and the angle detector 22 detects the average angle formed by the spot around the x axis.

In the surface profile measuring apparatus LMS having the optical unit 20 configured in the above-described manner, the $\theta$x stage 35 is driven to swing the measuring head 25 around the $\theta$x axis 33 in order to move the first and second probe light beams PL1 and PL2 along the measurement lines. In other words, the measurement lines L ($L_1$ to $L_3$ and the like) extend in the y axis direction when the surface profile measuring apparatus is used.

The control unit 50 controls the first and second probe light beams PL1 and PL2 so that they are applied along the measurement lines L to allow the distance detector 21 and the angle detector 22 to measure the distance and angle for each of the measurement points on the measurement lines L.

As described briefly with reference to Fig. 2, the control unit 50 is constituted by the manipulating section 51 configured to allow the operator to perform actuation and manipulation, the storage section 52 having the measurement programs, the reference profile of the object under measurement and the like stored and set thereon, the computing section 53 configured to perform various types of operations, the stage control section 54 configured to control the operations of the x, y, z, $\theta$x and $\theta$z stages 11, 12, 13, 35 and 14 based on the instruction signals output from the computing section 53, the measurement control section 55 configured to control the operation of the optical unit 20 based on the instruction signals output from the computing section 53, the I/O section 56 configured to exchange signals with outside, and the like.

The manipulating section 51 includes a liquid crystal display panel to display information such as measurement programs and measurements, a keyboard to allow a user to enter numerical values and character information, a mouse to allow the user to make selections, various types of switches, readers and writers that are capable of reading and writing the reference profile of the surface under measurement Ws and the measurements stored on storage media such as CDs, USB memories and the like, and the like. Thus, the surface profile measuring apparatus can interactively perform profile measurement according to the type of the surface under measurement Ws (for example, flat, spherical, aspherical, cylindrical or the like) and the measurement pattern (in a radial, stripe, or lattice pattern, or the like).

The storage section 52 includes a plurality of storage elements such as ROM and RAM. The ROM prestores thereon control programs to control the operations of the constituents of the surface profile measuring apparatus LMS, measurement programs for different types of objects under measurement W and different measurement patterns, and the like. The manipulating section 51 allows the type of the object under measurement W and the measurement pattern to be selected and designated, which enables the corresponding measurement programs to be incorporated into the control programs. As a result, a suitable surface profile measuring apparatus is configured for the object under measurement W. The RAM temporarily stores thereon the reference profile (the vector data of the designated values) of the surface under measurement Ws of the object under measurement, which is read by the readers and writers in the manipulating section 51 or via the I/O section 56, the reference angle of inclination for the measurement point on the measurement line designated in the measurement programs, the distance and angle data of each measurement point, which are output from the distance detector 21 and the angle detector 22 during the execution of the measurement programs, and the like.

The computing section 53 includes CPU, shift registers and the like, performs various types of operations based on the control and measurement programs prestored on the storage section 52, and outputs instruction signals to the stage control section 54, the measurement control section 55 and the like to control the movements of the workstage unit 10, the optical unit 20 and the head stage unit 30.

The stage control section 54 outputs drive signals to the x stage 11, the y stage 12, the z stage 13 and the θz stage 14 in the workstage unit 10, the θx stage 35 in the head stage unit 30, and the like based on the instruction signals output from the computing section 53 to control the operations of the stages. The measurement control section 55 outputs a measurement control signal to the distance detector 21 and the angle detector 22 of the optical unit 20 based on the instruction signals output from the computing section 53, to control the profile measurement performed on the surface under measurement Ws.

When the distance detector 21 and the angle detector 22 attempt to measure the distance to and angle of the measurement point on the measurement line, the control unit 50 controls the operations of the y stage 12 and the z stage 13 in such a manner that the normal to the measurement point travels through the θx axis 33 and the first probe light beam PL1 and the second probe light beam PL2 are applied to the same measurement point. In other words, the control unit 50 controls the operations of the y stage 12 and the z stage 13 in such a manner that the line of intersection S between the y-z plane of the distance detector 21 and the x-z plane of the angle detector 22 (hereinafter, referred to as "the virtual optical axis" for convenience) perpendicularly intersects with the surface under measurement and the above-mentioned measurement distance D is provided between the θx axis 33 and the measurement point on the virtual optical axis.

The control unit 50 controls the y stage 12 and the z stage 13 in the following manner so that the virtual optical axis S is perpendicularly incident on the surface under measurement and the measurement distance D is provided between the θx axis 33 and the measurement point on the virtual optical axis. To start with, the computing section 53 calculates the reference profile (the cross-sectional profile) of the surface under measurement Ws along the measurement line designated by the measurement programs, based on the reference profile of the surface under measurement Ws stored on the storage section 52. Subsequently, the angle of inclination for each of the measurement points designated on the measurement line is calculated. Following this, the calculated angles of inclination for the measurement points are used to calculate the angular position of the measuring head 25 (the θx stage 35) and the coordinate positions of the y stage 12 and the z stage 13 that together allow the virtual optical axis to be perpendicularly incident on each measurement point and achieve the measurement distance D between the θx axis 33 and the measurement point. After this, drive signals are generated based on the calculated positions of the stages and outputs the drive signals to the y, z and θx stages 12, 13 and 35 to move the object under measurement W and the measuring head 25 relative to each other.

Subsequently, the measurement control section 55 outputs a measurement control signal to the distance detector 21 and the angle detector 22 of the optical unit 20 to cause the optical unit 20 to emit the first and second probe light beams PL1 and PL2 to the object under measurement W that has been appropriately positioned. In this way, the virtual optical axis is perpendicularly incident on the surface under measurement and the first probe light beam PL1 and the second probe light beam PL2 emitted from the optical unit 20 are applied to the same measurement point (the measurement position).

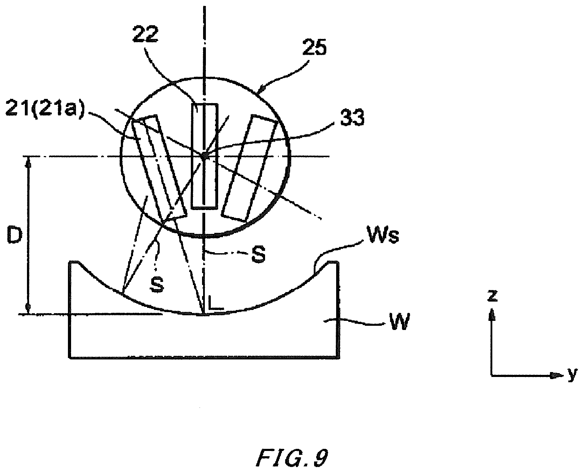

Fig. 9 schematically exemplifies and illustrates the above-described scenario and particularly shows a case where the surface under measurement Ws is concavely spherical. In this case, if the curvature radius of the surface under measurement is equivalent to the measurement distance D, the positions of the y stage 12 and the z stage 13 are adjusted (subjected to centering) so that the virtual optical axis S is perpendicularly incident on the surface under measurement Ws and the measurement distance D is provided between the θx axis 33 and the measurement point only for a single measurement point on the measurement line. In this way, the measurement can be performed for the subsequent points simply by operating only the θx stage 35 to swing the measuring head 25 in order to cause the first and second probe light beams PL1 and PL2 to be incident on the same measurement point on the measurement line along the y axis.

On the other hand, when the curvature radius of the surface under measurement Ws is not equivalent to the measurement distance D, or when the surface under measurement Ws is convex or aspherical, it is also required to operate the y stage 12 and the z stage 13 in addition to the θx stage 35, which allows the first and second probe light beams to scan the surface under measurement Ws along the measurement line. Otherwise, it is not possible to allow the virtual optical axis to be perpendicularly incident on the surface under measurement Ws and provide the measurement distance D between the θx axis 33 and the measurement point.

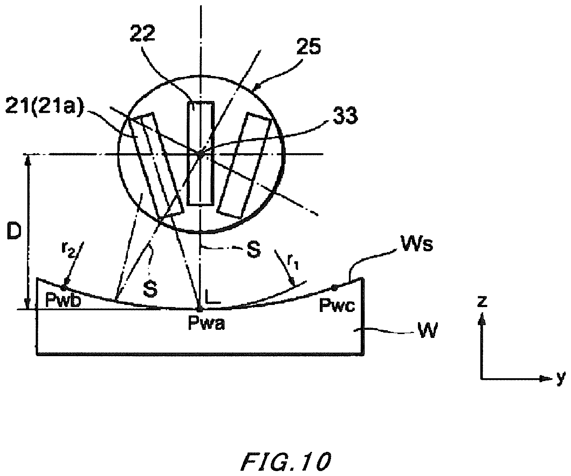

For example, a case is assumed where the surface under measurement Ws of the object under measurement is aspherical and the measurement point $P_{wa}$ at the axially central portion has a curvature radius $r_1$ and the measurement points $P_{wb}$ and $P_{wc}$ in the peripheral portion have a curvature radius $r_2$ as shown in Fig. 10. In this case, the computing section 53 reads the reference profile of the entire surface under measurement Ws prestored on the storage section 52, calculates the reference profile of the surface under measurement along the measurement line, and calculates the angle of inclination for each of the measurement points $P_{wa}$, $P_{wb}$, $P_{wc}$,... designated on the measurement line. Following this, based on the calculated angles of inclination of the measurement points, the angular positions of the θx stage 35 are calculated that respectively allow the virtual optical axis S to be perpendicularly incident on the measurement points $P_{wa}$, $P_{wb}$, $P_{wc}$,.... In addition, the coordinate positions of the y stage 12 and the z stage 13 are calculated that provide the measurement distance D between the θx axis 33 and the measurement point while the θx stage 35 is at each of the calculated angular positions.

Based on the calculated positions of the stages for each measurement point, drive signals are output to the y, z, and θx stages 11, 13 and 35 to move and position the object under measurement W and the measuring head 25 appropriately. In this way, the virtual optical axis S is perpendicularly incident on the surface under measurement at each of the measurement points $P_{wa}$, $P_{wb}$, $P_{wc}$,... on the measurement line along the y axis and the first probe light beam PL1 and the second probe light beam PL2 emitted from the optical unit 20 are applied to the same measurement point selected from among the measurement points $P_{wa}$, $P_{wb}$, $P_{wc}$,... on the measurement line along the y axis. After this, based on the positions of the measurement points $P_{wa}$, $P_{wb}$, $P_{wc}$,..., the distance from the θx axis to each of the measurement points $P_{wa}$, $P_{wb}$, $P_{wc}$,... that is detected by the distance detector 21, and the angle of each of the measurement points $P_{wa}$, $P_{wb}$, $P_{wc}$,... that is detected by the angle detector 22, the profile of the surface under measurement Ws along the measurement line is derived.

As described above, the surface profile measuring apparatus LMS corrects the angle of the measurement point detected by the angle detector 22 using the distance to the measurement point detected by the distance detector 21, and uses the position data of the measurement point and the corrected angle data to derive the profile of the surface under measurement. The following describes the specific examples of how to correct the angle using the distance to the measurement point detected by the distance detector 21 and how to derive the profile of the surface under measurement using the position data of the measurement point and the corrected angle data.

The photodetector 224 of the angle detector 22 uses a QPD and is capable of detecting the angle of inclination of the surface under measurement in all directions. In the present example, the angle of the surface under measurement detected by the angle detector 22 at each measurement point is used to calculate the angle around the x axis (the angle of inclination in the y axis direction). In addition, the distance between the θx axis 33 and the measurement point detected by the distance detector 21 is used to calculate the correction value for the angle around the x axis. The angle around the x axis detected by the angle detector 22 is corrected using the correction value for the angle around the x axis that is obtained based on the distance detected by the distance detector 21 to calculate the angle around the x axis at the measurement position, in other words, the angle of inclination in the y axis direction along the measurement line.

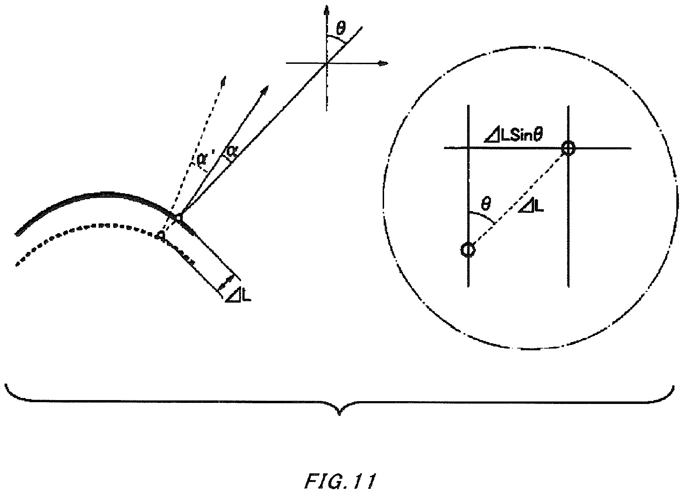

Fig. 11 illustrates the method of calculating the correction value for the angle around the x axis based on the distance detected by the distance detector 21. Fig. 11 shows that the first probe light beam emitted from the distance detector 21 is reflected by the surface under measurement Ws, and the dotted lines in the drawing show the surface under measurement when the object under measurement is positioned at the desired measurement position, and the solid lines indicate the surface under measurement when the object under measurement is off the desired position by a small distance (the actual case). The enlarged drawing in Fig. 11 shows how the positions of the two measurement points are defined relative to each other.

Here, between when the object under measurement is at the desired measurement position and when the object under measurement is off the desired measurement position, there is a difference ΔL in the distance between the θx axis 33 and the measurement point, which is detected by the distance detector 21. The angle detector 22 detects an

angle $\alpha'$ when the object under measurement is at the desired measurement position but detects an angle $\alpha$ when the object under measurement is off the desired measurement position. Here, the difference $\Delta L$ in distance between the two measurement points can be calculated based on the reference profile of the surface under measurement Ws stored on the storage section 52 and the distance to the measurement point detected by the position detector 21. The misalignment in the y axis direction between the two measurement points can be expressed as $\Delta L\sin\theta$ when $\theta$ denotes the angle of inclination of the measuring head 25. The difference in angle between the two measurement points $\alpha' - \alpha$ is expressed as follows, where R denotes the curvature radius of the reference profile of the surface under measurement Ws.

$$\alpha' - \alpha = \Delta L\sin\theta/R$$

As described above, the distance detected by the distance detector 21 is used to calculate the correction value $\Delta L\sin\theta/R$ for the angle, which is determined by the difference in position between the actual measurement point and the desired measurement point, and the correction value is added to the angle $\alpha$ around the x axis detected by the angle detector 22. In this way, the angle of the surface under measurement can be more accurately calculated. Since the corrected angle data is used, the surface profile can be more accurately calculated. Alternatively, the correlation between the difference in distance detected by the distance detector 21 (in units of $\mu$m) and the difference in angle can be calculated in advance, and the correlation can be used to correct the angle of inclination detected by the angle detector 22.

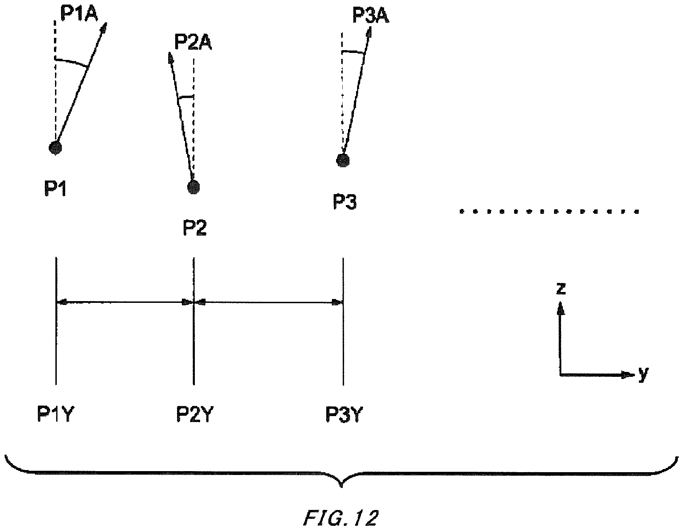

Subsequently, the angle of inclination calculated in the above-described manner is used to calculate the surface profile. Fig. 12 illustrates a method of deriving the profile of the surface under measurement based on the position data of the measurement point and the corrected angle data. In Fig. 12, the labels PI, P2 and P3 indicate the measurement points along the measurement line, the labels P1Y, P2Y and P3Y indicate the position data in the y axis direction of the measurement points PI, P2 and P3 (the desired measurement positions) and the labels P1A, P2A and P3A indicate the corrected angle data obtained in the above-described manner for the measurement points PI, P2 and P3.

The positions in the z axis direction of the measurement points P2, P3, P4,... are represented by the labels P2Z, P3Z, P4Z,..., which are calculated by the following expressions.

$$P2Z = (P2Y - P1Y) \times (P1A + P2A)/2 + P1Z$$

$$P3Z = (P3Y - P2Y) \times (P2A + P3A)/2 + P2Z$$

$$P4Z = (P4Y - P3Y) \times (P3A + P4A)/2 + P3Z$$

When the position P1Z of the measurement point P1 in the z axis direction is set to 0 (zero), the position P2Z of the measurement point P2 in the z axis direction is expressed by the following expression.

$$P2Z = (P2Y - P1Y) \times (P1A + P2A)/2$$

The labels P2Y and P3Y denote the position data of the measurement points P2 and P3 in the y axis direction and are known. In addition, the labels P1A and P2A denotes the corrected angle data of the measurement points P1 and P2, which are obtained as a result of the angle correction based on the distance detected by the distance detector 21. Accordingly, the position of the measurement point P2 in the z axis direction P2Z can be calculated, and the positions P3Z, P4Z,... can be sequentially calculated in the same manner. In the above-described manner, for the measurement points P1, P2, P3,... along the measurement line extending in the y axis direction, their positions in the z axis direction and their angles of inclination in the y axis direction are calculated.

The positions in the z axis direction and the angles of inclination in the y axis direction that are calculated for the measurement points in the above-described manner are subjected to operations using known techniques including integration and fitting. In this way, the profile of the surface under measurement Ws along the measurement line can be derived.

As described above, the surface profile measuring apparatus LMS is configured such that the first probe light beam PL1 of the distance detector 21 and the second probe light beam PL2 of the angle detector 22 are respectively obliquely incident on the surface under measurement Ws at predetermined angles of incidence $\theta_1$ and $\theta_2$ ($\theta_1 \neq 0$ and $\theta_2 \neq 0$). With such a configuration, even if the object under measurement W is made of a material transparent to the first and second probe light beams, the light reflected by the surface under measurement Ws can be clearly separated from the light reflected by the back surface of the object under measurement. In addition, an aperture or the like may be provided at an appropriate position in order to separate the back-surface reflected light.

The surface profile measuring apparatus LMS is also configured such that the plane of incidence of the second probe light beam in the angle detector 22 is orthogonal to the measurement line L (see Fig. 7B). This configuration is employed because the change in angle is large in the direction along the measurement line L and small in the direction orthogonal to the measurement line L especially when the surface under measurement is axially symmetrical. The above-described configuration can contribute to the reduction in the errors that may be included in the detected angles that are attributable to the errors in the positions of the measurement points to which the second probe light beam is applied.

The distance detector 21 is configured such that the plane of incidence of the first probe light beam PL1 is the y-z plane and the angle detector 22 is configured such that the plane of incidence of the second probe light beam PL2 is the x-z plane. In other words, the measuring head 25 is configured such that the plane of incidence of the first probe light beam is orthogonal to the plane of incidence of the second probe light beam. With such a configuration, the distance detector 21 and the angle detector 22 can be efficiently arranged on the unit base 23 that has a relatively small diameter, which can allow the measuring head 25 to have a compact structure.

According to the present embodiment, the distance detector 21 is an optical system where the light collected by the collective lens 213 is received at the photodetector 214. Therefore, the change in height between the measurement points can be sensitively detected. In addition, the angle detector 22 is an optical system where the light collimated by the collimating lens 223 is received. Therefore, the inclination of the plane at the measurement point can be sensitively detected.

In addition, the surface profile measuring apparatus LMS ic configured such that the first probe light beam PL1 of the distance detector 21 intersects with the second probe light beam PL2 of the angle detector 22 and the first and second probe light beams PL1 and PL2 are controlled so that the measurement point is positioned at the intersection (the measurement position) of the two probe light beams. Accordingly, the first and second probe light beams PL1 and PL2 applied to the measurement point do not change depending on where the measurement point is positioned on the measurement line. This enables the surface profile measuring apparatus LMS to measure the surface profile with constant accuracy regardless of where the measurement points are positioned on the measurement line. In addition, the collective lens 212 configured to collect the first probe light beam PL1 of the distance detector 21 and the collective lens 222 configured to collect the second probe light beam PL2 of the angle detector 22 are formed by using collective lenses having the same focal length. With such a configuration, the first probe light beam and the second probe light beam that are collected and then applied to the measurement point have substantially the same focal depth. Therefore, the present embodiment can eliminate the influence of the error components caused by the difference in focal depth and the like.

In the present embodiment, the specific examples of the distance detector 21 and the angle detector 22 are described. Note that, however, any optical systems can be used as long as they allow the probe light beams to be incident on the measurement points at angles and can measure the change in the distance to and the change in the angle of the region of approximately several hundred microns.

DESCRIPTION OF REFERENCE NUMERALS

LMS: surface profile measuring apparatus
10: workstage unit (applied position moving mechanism)
11: x stage, 12: y stage, 13: z stage, 14: θz stage
15: work holder
20: optical unit
21: distance detector (21a: light emitting section, 21b: light receiving section), 22: angle detector
25: measuring head
30: head stage unit (applied position moving mechanism)
33: θx axis
35: θx stage
50: control unit (controller)
L(L$_1$ to L$_3$): measurement line
PL1: first probe light beam
PL2: second probe light beam
W (W$_1$, W$_2$): object under measurement
Ws: surface under measurement
$\theta_1$: angle of incidence of the first probe light beam on the surface under measurement

$\theta_2$: angle of incidence of the second probe light beam on the surface under measurement

**Claims**

1. A surface profile measuring apparatus (LMS) comprising:

   a measuring head (25) including a distance detector (21) and an angle detector (22), the distance detector (21) configured to detect a distance to a surface under measurement (Ws) of an object under measurement (W, $W_1$, $W_2$) using a first probe light beam (PL1), the angle detector (22) configured to detect an angle of the surface under measurement (Ws) using a second probe light beam (PL2);
   an applied position moving mechanism (10, 30) configured to move applied positions of the first probe light beam (PL1) and the second probe light beam (PL2) on the surface under measurement (Ws); and
   a controller (50) configured to derive a profile of the surface under measurement (Ws) based on the applied positions of the first and second probe light beams (PL1, PL2), the distance to the surface under measurement (Ws) detected by the distance detector (21) and the angle of the surface under measurement (Ws) detected by the angle detector (22), wherein
   the surface profile measuring apparatus is configured such that the first probe light beam (PL1) is obliquely incident on the surface under measurement (Ws) at a predetermined angle of incidence ($\theta_1$) with respect to the surface under measurement (Ws), and
   the controller (50) is configured to correct the angle of the surface under measurement (Ws) detected by the angle detector (22) using the distance to the surface under measurement (Ws) detected by the distance detector (21).

2. The surface profile measuring apparatus (LMS) as set forth in Claim 1, wherein the surface profile measuring apparatus is configured such that the second probe light beam (PL2) is obliquely incident on the surface under measurement (Ws) at a predetermined angle of incidence ($\theta_2$) with respect to the surface under measurement (Ws).

3. The surface profile measuring apparatus (LMS) as set forth in Claim 1 or 2, wherein

   the distance detector (21) and the angle detector (22) are disposed in the measuring head (25) in such a manner that the first probe light beam (PL1) and the second probe light beam (PL2) emitted toward the surface under measurement (Ws) intersect with each other, and
   the controller (50) is configured to control operation of the applied position moving mechanism (10, 30) in such a manner that a measurement position is positioned at the intersection between the first probe light beam (PL1) and the second probe light beam (PL2).

4. The surface profile measuring apparatus (LMS) as set forth in one of Claims 1 to 3, wherein

   the applied position moving mechanism (10, 30) is configured to control the applied positions of the first probe light beam (PL1) and the second probe light beam (PL2) so that the applied positions move along a preset measurement line (L, $L_1$, $L_2$), and
   a plane of incidence of the second probe light beam (PL2) with respect to the surface under measurement (Ws) is orthogonal to the measurement line (L, $L_1$, $L_2$).

5. The surface profile measuring apparatus (LMS) as set forth in one of Claims 1 to 4, wherein
   the distance detector (21) and the angle detector (22) are disposed in the measuring head (25) in such a manner that a plane of incidence of the first probe light beam (PL1) with respect to the surface under measurement (Ws) is orthogonal to a plane of incidence of the second probe light beam (PL2) with respect to the surface under measurement (Ws).

6. The surface profile measuring apparatus (LMS) as set forth in Claim 3, wherein
   the controller (50) is configured to control operation of the applied position moving mechanism (10, 30) in such a manner that a normal to the surface under measurement (Ws) at the measurement position coincides with a line of intersection between a plane of incidence of the first probe light beam (PL1) and a plane of incidence of the second probe light beam (PL2).

7. The surface profile measuring apparatus (LMS) as set forth in Claim 1 wherein

the measuring head (25) has a rotation axis around which the measuring head (25) is capable of rotating to swing the distance detector (21) and the angle detector (22).

8. The surface profile measuring apparatus (LMS) as set forth in Claim 7, wherein

the second probe light beam (PL2) is configured to be obliquely incident on the surface under measurement (Ws) at a predetermined angle of incidence with respect to the surface under measurement (Ws), the distance detector (21) and the angle detector (22) are disposed in the measuring head (25) in such a manner that the first probe light beam (PL1) and the second probe light beam (PL2) intersect with each other, and the controller (50) controls operation of the applied position moving mechanism (10, 30) in such a manner that a measurement position is positioned at the intersection between the first probe light beam (PL1) and the second probe light beam (PL2).

9. The surface profile measuring apparatus (LMS) as set forth in one of Claims 1 to 8, wherein the controller (50) is configured to calculate a correction value to correct the angle of the surface under measurement (Ws) based on (i) a difference between a distance to a measurement position of the surface under measurement (Ws), the distance having been detected by the distance detector (21), and a distance to a desired position of the object under measurement (W, $W_1$, $W_2$), (ii) inclination of the measuring head (25) and (iii) a curvature radius of a reference profile of the object under measurement (W, $W_1$, $W_2$).

10. The surface profile measuring apparatus (LMS) as set forth in one of Claims 1 to 8, wherein the controller (50) is configured to obtain in advance correlation between (i) a difference between a distance to a measurement position of the surface under measurement (Ws), the distance having been detected by the distance detector (21), and a distance to a desired position of the object under measurement (W, $W_1$, $W_2$) and (ii) a difference in angle and is configured to correct the angle detected by the angle detector (22) based on the correlation.

11. The surface profile measuring apparatus (LMS) as set forth in one of Claims 1 to 10, wherein the angle detector (22) includes an aperture configured to remove the second probe light beam (PL2) that has been reflected by a back surface of the object under measurement (W, $W_1$, $W_2$).

**Patentansprüche**

1. Oberflächenprofilmessvorrichtung (LMS), aufweisend:

einen Messkopf (25) mit einem Entfernungsdetektor (21) und einem Winkeldetektor (22), wobei der Entfernungsdetektor (21) dazu eingerichtet ist, einen Abstand zu einer zu messenden Oberfläche (Ws) eines zu messenden Objekts (W, $W_1$, $W_2$) unter Verwendung eines ersten Sondenlichtstrahls (PL1) zu erfassen, wobei der Winkeldetektor (22) dazu eingerichtet ist, einen Winkel der zu messenden Oberfläche (Ws) unter Verwendung eines zweiten Sondenlichtstrahls (PL2) zu erfassen; einen Aufbringungsposition-Bewegungsmechanismus (10, 30), der zum Bewegen von Aufbringungspositionen des ersten Sondenlichtstrahls (PL1) und des zweiten Sondenlichtstrahls (PL2) auf der zu messenden Oberfläche (Ws) eingerichtet ist; und eine Steuerung (50), die dazu eingerichtet ist, ein Profil der zu messenden Oberfläche (Ws) basierend auf den Aufbringungspositionen der ersten und zweiten Sondenlichtstrahlen (PL1, PL2), dem Abstand zu der zu messenden Oberfläche (Ws), der durch den Entfernungsdetektor (21) erfasst wird, und dem Winkel der zu messenden Oberfläche (Ws), der durch den Winkeldetektor (22) erfasst wird, abzuleiten, wobei die Oberflächenprofilmessvorrichtung so eingerichtet ist, dass der erste Sondenlichtstrahl (PL1) schräg auf die zu messende Oberfläche (Ws) unter einem vorbestimmten Einfallswinkel ($\theta_1$) in Bezug auf die zu messende Oberfläche (Ws) einfällt, und die Steuerung (50) dazu eingerichtet ist, den Winkel der zu messenden Oberfläche (Ws), die von dem Winkeldetektor (22) erfasst wird, unter Verwendung des Abstands zu der zu messenden Oberfläche (Ws), der von dem Entfernungsdetektor (21) erfasst wird, zu korrigieren.

2. Oberflächenprofilmessvorrichtung (LMS) nach Anspruch 1, wobei die Oberflächenprofilmessvorrichtung so eingerichtet ist, dass der zweite Sondenlichtstrahl (PL2) schräg auf die zu messende Oberfläche (Ws) unter einem vorbestimmten Einfallswinkel ($\theta_2$) in Bezug auf die zu messende Oberfläche (Ws) einfällt.

**3.** Oberflächenprofilmessvorrichtung (LMS) nach Anspruch 1 oder 2, wobei

der Entfernungsdetektor (21) und der Winkeldetektor (22) so in dem Messkopf (25) angeordnet sind, dass sich der erste Sondenlichtstrahl (PL1) und der zweite Sondenlichtstrahl (PL2), die in Richtung der zu messenden Oberfläche (Ws) emittiert werden, schneiden und die Steuerung (50) dazu eingerichtet ist, den Betrieb des Aufbringungsposition-Bewegungsmechanismus (10, 30) so zu steuern, dass eine Messposition an der Schnittstelle zwischen dem ersten Sondenlichtstrahl (PL1) und dem zweiten Sondenlichtstrahl (PL2) positioniert ist.

**4.** Oberflächenprofilmessvorrichtung (LMS) nach einem der Ansprüche 1 bis 3, wobei

der Aufbringungsposition-Bewegungsmechanismus (10, 30) dazu eingerichtet ist, die Aufbringungspositionen des ersten Sondenlichtstrahls (PL1) und des zweiten Sondenlichtstrahls (PL2) so zu steuern, dass sich die Aufbringungspositionen entlang einer vorgegebenen Messlinie (L, $L_1$, $L_2$) bewegen, und eine Einfallsebene des zweiten Sondenlichtstrahls (PL2) in Bezug auf die zu messende Oberfläche (Ws) orthogonal zu der Messlinie (L, $L_1$, $L_2$) ist.

**5.** Oberflächenprofilmessvorrichtung (LMS) nach einem der Ansprüche 1 bis 4, wobei
der Abstandsdetektor (21) und der Winkeldetektor (22) im Messkopf (25) so angeordnet sind, dass eine Einfallsebene des ersten Sondenlichtstrahls (PL1) in Bezug auf die zu messende Oberfläche (Ws) orthogonal zu einer Einfallsebene des zweiten Sondenlichtstrahls (PL2) in Bezug auf die zu messende Oberfläche (Ws) ist.

**6.** Oberflächenprofilmessvorrichtung (LMS) nach Anspruch 3, wobei
die Steuerung (50) dazu eingerichtet ist, den Betrieb des Aufbringungsposition-Bewegungsmechanismus (10, 30) so zu steuern, dass eine Normale zu der zu messenden Oberfläche (Ws) an der Messposition mit einer Schnittlinie zwischen einer Einfallsebene des ersten Sondenlichtstrahls (PL1) und einer Einfallsebene des zweiten Sondenlichtstrahls (PL2) zusammenfällt.

**7.** Oberflächenprofilmessvorrichtung (LMS) nach Anspruch 1, bei der
der Messkopf (25) eine Drehachse aufweist, um die sich der Messkopf (25) zum Schwenken des Entfernungsdetektors (21) und des Winkeldetektors (22) drehen kann.

**8.** Oberflächenprofilmessvorrichtung (LMS) nach Anspruch 7, bei der

der zweite Sondenlichtstrahl (PL2) dazu eingerichtet ist, schräg auf die zu messende Oberfläche (Ws) in einem vorbestimmten Einfallswinkel in Bezug auf die zu messende Oberfläche (Ws) einzufallen, der Entfernungsdetektor (21) und der Winkeldetektor (22) so in dem Messkopf (25) angeordnet sind, dass sich der erste Sondenlichtstrahl (PL1) und der zweite Sondenlichtstrahl (PL2) schneiden, und die Steuerung (50) den Betrieb des Aufbringungsposition-Bewegungsmechanismus (10, 30) so steuert, dass eine Messposition an der Schnittstelle zwischen dem ersten Sondenlichtstrahl (PL1) und dem zweiten Sondenlichtstrahl (PL2) positioniert ist.

**9.** Oberflächenprofilmessvorrichtung (LMS) nach einem der Ansprüche 1 bis 8, bei der
die Steuerung (50) dazu eingerichtet ist, einen Korrekturwert zum Korrigieren des Winkels der zu messenden Oberfläche (Ws) zu berechnen, basierend auf (i) einer Differenz zwischen einem Abstand zu einer Messposition der zu messenden Oberfläche (Ws), wobei der Abstand von dem Entfernungsdetektor (21) erfasst wurde, und einem Abstand zu einer gewünschten Position des zu messenden Objekts (W, $W_1$, $W_2$), (ii) Neigung des Messkopfes (25) und (iii) einem Krümmungsradius eines Referenzprofils des zu messenden Objekts (W, $W_1$, $W_2$).

**10.** Oberflächenprofilmessvorrichtung (LMS) nach einem der Ansprüche 1 bis 8, wobei
die Steuerung (50) dazu eingerichtet ist, im Voraus eine Korrelation zwischen (i) einer Differenz zwischen einem Abstand zu einer Messposition der zu messenden Oberfläche (Ws), wobei der Abstand durch den Entfernungsdetektor (21) erfasst wurde, und einem Abstand zu einer gewünschten Position des zu messenden Objekts (W, $W_1$, $W_2$), und (ii) einer Differenz im Winkel zu erhalten und dazu eingerichtet ist, den durch den Winkeldetektor (22) erfassten Winkel basierend auf der Korrelation zu korrigieren.

**11.** Oberflächenprofilmessvorrichtung (LMS) nach einem der Ansprüche 1 bis 10, wobei
der Winkeldetektor (22) eine Blende aufweist, die dazu eingerichtet ist, den zweiten Sondenlichtstrahl (PL2) zu entfernen, der von einer Rückfläche des zu messenden Objekts (W, $W_1$, $W_2$) reflektiert wurde.

**Revendications**

1. Appareil de mesure de profil de surface (LMS) comprenant :

une tête de mesure (25) incluant un détecteur de distance (21) et un détecteur d'angle (22), le détecteur de distance (21) étant configuré pour détecter une distance à une surface à mesurer (Ws) d'un objet à mesurer (W, $W_1$, $W_2$) en utilisant un premier faisceau de lumière de sonde (PL1), le détecteur d'angle (22) étant configuré pour détecter un angle de la surface à mesurer (Ws) en utilisant un second faisceau de lumière de sonde (PL2) ;
un mécanisme de déplacement de positions appliquées (10, 30) configuré pour déplacer des positions appliquées du premier faisceau de lumière de sonde (PL1) et du second faisceau de lumière de sonde (PL2) sur la surface à mesurer (Ws) ; et
un dispositif de commande (50) configuré pour dériver un profil de la surface à mesurer (Ws) sur la base des positions appliquées du premier et du second faisceau de lumière de sonde (PL1, PL2), de la distance à la surface à mesurer (Ws) détectée par le détecteur de distance (21) et de l'angle de la surface à mesurer (Ws) détecté par le détecteur d'angle (22), dans lequel
l'appareil de mesure de profil de surface est configuré de sorte que le premier faisceau de lumière de sonde (PL1) ait une incidence oblique sur la surface à mesurer (Ws) au niveau d'un angle d'incidence prédéterminé ($\theta_1$) par rapport à la surface à mesurer (Ws), et
le dispositif de commande (50) est configuré pour corriger l'angle de la surface à mesurer (Ws) détecté par le détecteur d'angle (22) en utilisant la distance à la surface à mesurer (Ws) détectée par le détecteur de distance (21).

2. Appareil de mesure de profil de surface (LMS) selon la revendication 1, dans lequel l'appareil de mesure de profil de surface est configuré de sorte que le second faisceau de lumière de sonde (PL2) ait une incidence oblique sur la surface à mesurer (Ws) au niveau d'un angle d'incidence prédéterminé ($\theta_2$) par rapport à la surface à mesurer (Ws).

3. Appareil de mesure de profil de surface (LMS) selon la revendication 1 ou 2, dans lequel
le détecteur de distance (21) et le détecteur d'angle (22) sont disposés dans la tête de mesure (25) de telle manière que le premier faisceau de lumière de sonde (PL1) et le second faisceau de lumière de sonde (PL2) émis vers la surface à mesurer (Ws) se coupent l'un l'autre, et
le dispositif de commande (50) est configuré pour commander le fonctionnement du mécanisme de déplacement de positions appliquées (10, 30) de telle manière qu'une position de mesure soit disposée à l'intersection entre le premier faisceau de lumière de sonde (PL1) et le second faisceau de lumière de sonde (PL2).

4. Appareil de mesure de profil de surface (LMS) selon l'une quelconque des revendications 1 à 3, dans lequel
le mécanisme de déplacement de positions appliquées (10, 30) est configuré pour commander les positions appliquées du premier faisceau de lumière de sonde (PL1) et du second faisceau de lumière de sonde (PL2) de sorte que les positions appliquées se déplacent le long d'une ligne de mesure préétablie (L, $L_1$, $L_2$), et
un plan d'incidence du second faisceau de lumière de sonde (PL2) par rapport à la surface à mesurer (Ws) est orthogonal à la ligne de mesure (L, $L_1$, $L_2$).

5. Appareil de mesure de profil de surface (LMS) selon l'une quelconque des revendications 1 à 4, dans lequel
le détecteur de distance (21) et le détecteur d'angle (22) sont disposés dans la tête de mesure (25) de telle manière qu'un plan d'incidence du premier faisceau de lumière de sonde (PL1) par rapport à la surface à mesurer (Ws) soit orthogonal à un plan d'incidence du second faisceau de lumière de sonde (PL2) par rapport à la surface à mesurer (Ws).

6. Appareil de mesure de profil de surface (LMS) selon la revendication 3, dans lequel
le dispositif de commande (50) est configuré pour commander le fonctionnement du mécanisme de déplacement de positions appliquées (10, 30) de telle manière qu'une normale à la surface à mesurer (Ws) au niveau de la position de mesure coïncide avec une ligne d'intersection entre un plan d'incidence du premier faisceau de lumière de sonde (PL1) et un plan d'incidence du second faisceau de lumière de sonde (PL2).

7. Appareil de mesure de profil de surface (LMS) selon la revendication 1, dans lequel
la tête de mesure (25) présente un axe de rotation autour duquel la tête de mesure (25) est capable de tourner pour faire pivoter le détecteur de distance (21) et le détecteur d'angle (22).

8. Appareil de mesure de profil de surface (LMS) selon la revendication 7, dans lequel
le second faisceau de lumière de sonde (PL2) est configuré pour présenter une incidence oblique sur la surface à mesurer (Ws) au niveau d'un angle d'incidence prédéterminé par rapport à la surface à mesurer (Ws),
le détecteur de distance (21) et le détecteur d'angle (22) sont disposés dans la tête de mesure (25) de telle manière que le premier faisceau de lumière de sonde (PL1) et le second faisceau de lumière de sonde (PL2) se coupent l'un l'autre, et
le dispositif de commande (50) commande le fonctionnement du mécanisme de déplacement de positions appliquées (10, 30) de telle manière qu'une position de mesure soit disposée à l'intersection entre le premier faisceau de lumière de sonde (PL1) et le second faisceau de lumière de sonde (PL2).

9. Appareil de mesure de profil de surface (LMS) selon l'une quelconque des revendications 1 à 8, dans lequel
le dispositif de commande (50) est configuré pour calculer une valeur de correction pour corriger l'angle de la surface à mesurer (Ws) sur la base (i) d'une différence entre une distance à une position de mesure de la surface à mesurer (Ws), la distance ayant été détectée par le détecteur de distance (21), et une distance à une position souhaitée de l'objet à mesurer (W, $W_1$, $W_2$), (ii) d'une inclinaison de la tête de mesure (25) et (iii) d'un rayon de courbure d'un profil de référence de l'objet à mesurer (W, $W_1$, $W_2$).

10. Appareil de mesure de profil de surface (LMS) selon l'une quelconque des revendications 1 à 8, dans lequel
le dispositif de commande (50) est configuré pour dériver à l'avance une corrélation entre (i) une différence entre une distance à une position de mesure de la surface à mesurer (Ws), la distance ayant été détectée par le détecteur de distance (21), et une distance à une position souhaitée de l'objet à mesurer (W, $W_1$, $W_2$) et (ii) une différence d'angle et est configuré pour corriger l'angle détecté par le détecteur d'angle (22) sur la base de la corrélation.

11. Appareil de mesure de profil de surface (LMS) selon l'une quelconque des revendications 1 à 10, dans lequel
le détecteur d'angle (22) inclut une ouverture configurée pour éliminer le second faisceau de lumière de sonde (PL2) qui a été réfléchi par une surface arrière de l'objet à mesurer (W, $W_1$, $W_2$).

*FIG.1*

EP 3 187 822 B1

FIG.2

*FIG.3*

*FIG.4A*

EP 3 187 822 B1

FIG.4B

22

*FIG.5*

*FIG.6A*

*FIG.6B*

FIG.7A

*FIG.7B*

FIG.8

*FIG.9*

*FIG.10*

*FIG.11*

*FIG.12*

**EP 3 187 822 B1**

**REFERENCES CITED IN THE DESCRIPTION**

**Patent documents cited in the description**

- JP 11051624 A
- JP 2003161615 A
- US 2013301042 A1
- US 6094268 A
- JP H06213623 A
- US 5929983 A
- JP H05203431 A
- JP H08240408 A